# EUROPEAN PATENT SPECIFICATION

(11) **EP 1 298 949 B1**
(45) Date of publication and mention of the grant of the patent: **02.03.2005**
(21) Application number: 01402507.6
(22) Date of filing: 28.09.2001
(51) Int. Cl.: H04Q 7/38, H04L 27/26, H04B 1/38

(54) **Communication system with detection of extra-system interference**
Kommunikationssystem zur Detektion von ausserhalb des Systems erzeugter Interferenz
Système de communication avec détection d'interférence extra-système

(43) Date of publication of application: 02.04.2003
(73) Proprietor: MOTOROLA, INC., Schaumburg, IL 60196 (US)
(72) Inventor: Vigier, David Alfred, 92160 Antony (FR); Arnaudet, Guillaume Marc, 91192 Gif-Sur-Yvette (FR); Simoens, Sebastien, 78210 St Cyr L'Ecole (FR)
(74) Representative: Cross, Rupert Edward Blount

(56) References cited:
- US-A- 5 752 164
- US-A- 5 974 101
- PATENT ABSTRACTS OF JAPAN vol. 2000, no. 25, 12 April 2001 (2001-04-12) & JP 2001 237846 A (NIPPON TELEGR & TELEPH CORP), 31 August 2001 (2001-08-31)
- SATORU AIKAWA ET AL: "BIT INTERLEAVING TECHNIQUE AS A RADAR INTERFERENCE CANCELLER IN DIGITAL MICROWAVE RADIO SYSTEMS" DISCOVERING A NEW WORLD OF COMMUNICATIONS. CHICAGO, JUNE 14 - 18, 1992. BOUND TOGETHER WITH B0190710, VOL. 4, PROCEEDINGS OF THE INTERNATIONAL CONFERENCE ON COMMUNICATIONS, NEW YORK, IEEE, US, vol. 3, 14 June 1992 (1992-06-14), pages 1482-1486, XP000337953 ISBN: 0-7803-0599-X

## Description

### Field of the invention

This invention relates to a method of and apparatus for communication between terminals with detection of extra-system interference, comprising transmitting data between said terminals in an electromagnetic signal comprising signal bursts.

### Background of the invention

The invention is particularly applicable to radio communication in ranges of frequency where interference is likely between the communications and radar signals; however it will be appreciated that the invention is applicable in other situations also.

Interference with radar is a particular concern for communication according to the 'HiperLAN' standards of the European Telecommunications Standards Institute ('ETSI'), summarised in standard TR 101 683 V1.1.1 (2000-02).

The increasing demand for "anywhere, anytime" communications and the merging of voice, video and data communications create a demand for broadband wireless networks. ETSI has created the Broadband Radio Access Network ('BRAN') project to develop standards and specifications that cover a wide range of applications and are intended for different frequency bands. This range of applications covers systems for licensed and license exempt use.

HiperLAN/2 is a BRAN standard for a high speed radio communication system with typical data rates from 6 Mbit/s to 54 Mbit/s in a radio-linked local area network ('LAN'). It connects Mobile Terminals ('MT') - usually portable devices - with broadband networks that are based on Internet Protocol ('IP'), Asynchronous Transfer Mode ('ATM') or other technologies. Centralized mode is used to operate HiperLAN/2 as an access network via a fixed Access Point (AP) - the base station. In addition a capability for direct link communication is provided: this latter mode is used to operate HiperLAN/2 as an adhoc network without relying on a cellular network infrastructure and in this case a central controller (CC), which is dynamically selected among the portable devices, provides the same level of QoS support as the fixed access point. HiperLAN/2 is capable of supporting multi-media applications by providing mechanisms to handle Quality of Service ('QoS') adaptation. Restricted user mobility is supported within the local service area; wide area mobility (e.g. roaming) may be supported by standards outside the scope of the BRAN project. HiperLAN/2 systems operate in the 5 GHz band.

The frequency ranges allocated by the European Conference of Postal and Telecommunications Administrations, European Radiocommunications Committee are:

| Frequency band RF | Power limit | Comments |
|---|---|---|
| 5 150 MHz - 5 350 MHz | 200 mW mean EIRP* | Indoor use only |
| 5 470 MHz - 5 725 MHz | 1 W mean EIRP* | Indoor and outdoor use |

| | | |
|---|---|---|
| (* 'EIRP' = Equivalent Isotropic Radiated Power) | | |

HiperLAN/2 systems have to be able to share the allotted frequency ranges with radar systems, some of which are mobile. This type of sharing requires dynamic adaptation - called Dynamic Frequency Selection (DFS) - to local interference conditions - a method that is also needed to facilitate uncoordinated sharing among HiperLAN systems.

A different (usually higher) degree of 'intra-system' interference (that is to say interference between two HiperLAN/2 devices) may be tolerated than for 'extra-system' interference (that is to say interference between a HiperLAN/2 device and a device of a different type of system, such as a radar device). Also, or alternatively, a different reaction may be required to intra-system interference than to extra-system interference.

Accordingly, it is desirable to be able to detect and distinguish between intra-system interference and extra-system interference; however, the detection and distinction is not perfect and it is desirable to minimise the incidence of false alerts. The current ETSI specifications do not provide suitable techniques for distinguishing between intra-system interference and extra-system interference.

More generally, other situations arise involving communication between two or more terminals where data is transmitted between the terminals in an electromagnetic signal comprising signal bursts and it is desired to detect extra-system interference (that is to say interference between a terminal of the communication system and a device of a different type of system) and distinguish it from intra-system interference (that is to say interference between two terminals of the same system that are not in direct communication).

One system for discriminating between microwave point-to-point users and PCS users is known from document US 5 752 164.

### Summary of the invention

The present invention provides a method of and apparatus for communication between terminals with detection of extra-system interference as described in the accompanying claims.

### Brief description of the drawings

Figure 1 is a schematic diagram showing the allocations of frequency spectrum in the 5GHz band by the European Conference of Postal and Telecommunications Administrations, European Radiocommunications Committee;
Figure 2 is a waveform diagram showing a received HiperLAN burst signal compared with a radar signal;
Figure 3 is a schematic diagram of a system comprising an access point and a mobile terminal in accordance with one embodiment of the present invention;
Figure 4 is a diagram showing samples of received signals including both intra-system and extra-system interference as detected in accordance with one embodiment of the present invention;
Figure 5 is a diagram showing samples of received signals including both intra-system and extra-system interference as detected in accordance with another embodiment of the present invention;
Figure 6 is a flow-chart showing steps of a method of detecting interference in accordance with an embodiment of the present invention; and
Figure 7 is a flow-chart showing steps of a method of distinguishing between intra-system and extra-system interference in accordance with an embodiment of the present invention.

### Detailed description of the preferred embodiments

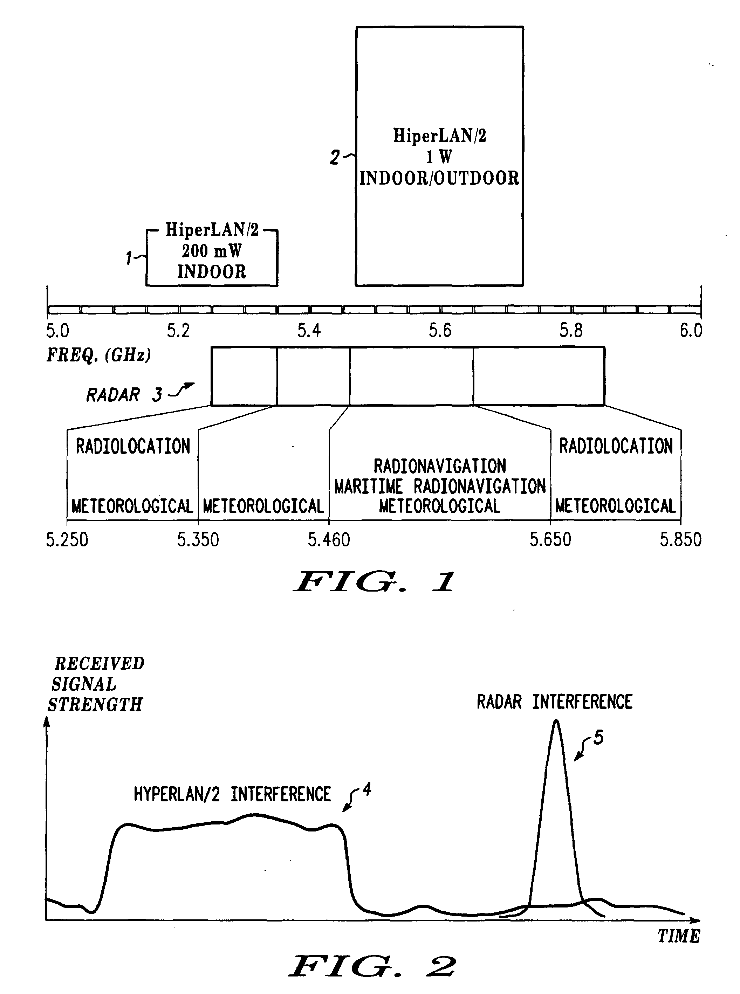

Referring first to figure 1, it will be seen that the HiperLAN/2 frequency ranges allotted by the European Conference of Postal and Telecommunications Administrations as shown at 1 and 2 are partly shared with radar, radio location frequencies occurring in range from 5250 to 5350 MHz and from 5650 to 5850 MHz, maritime and other radio navigation occurring in the range from 5460 to 5650 MHz and meteorological radar occurring in the complete band from 5250 to 5850 MHz, as shown at 3.

Different types of radar signals may be encountered. However typical characteristics are currently defined by three radar signals proposed by ETSI for testing HiperLAN/2 systems, as follows:

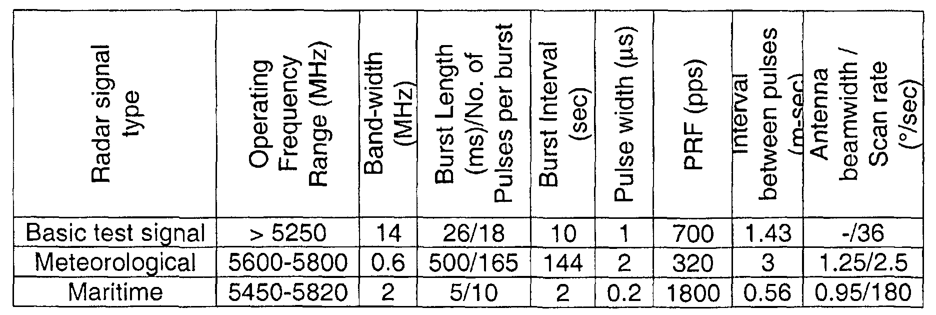

In HiperLAN communication, the signals are transmitted with orthogonal frequency division modulation ('OFDM') on a carrier, with several (64) sub-carriers, the signal transmitted (called a "burst" in the HiperLAN/2 specifications) having a minimum duration of eight microseconds, and the signals being grouped in frames of two milliseconds. Radar signals, on the other hand, consist of a repetitive series (called a "burst" in radar specifications) of pulses, the pulse width being typically less than two microseconds.

The difference between the signal durations of a HiperLAN/2 signal 4 and a typical radar pulse 5 received at a HiperLAN terminal is shown in figure 2. The HiperLAN/2 signal will be intra-system interference if the signal is not intended for that terminal and the radar signal 5 is always extra-system interference.

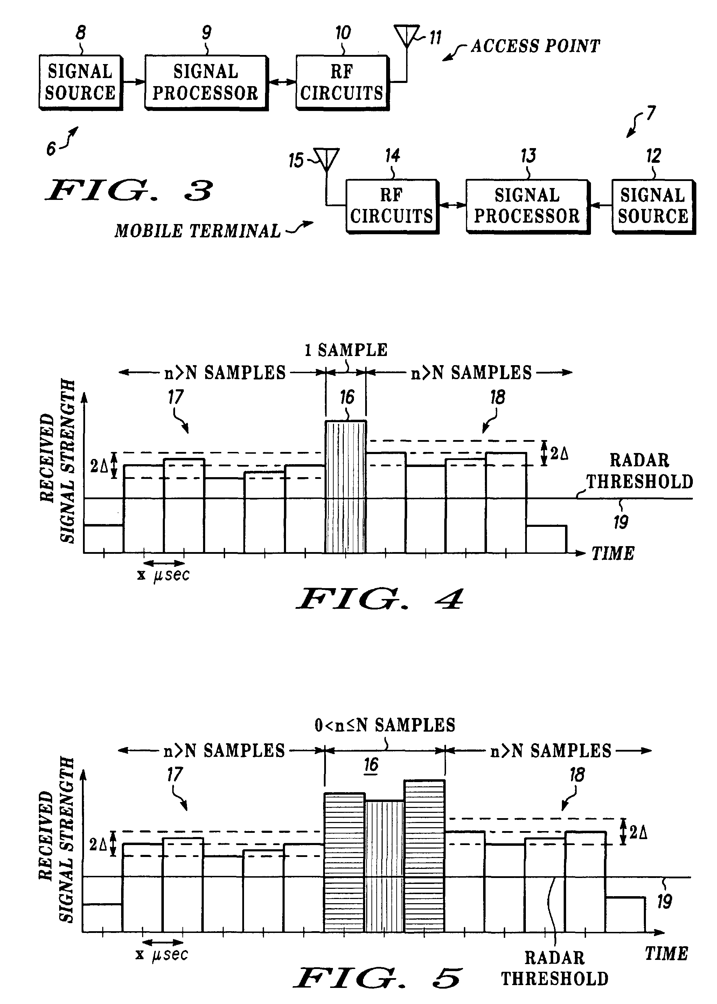

Figure 3 shows schematically a HiperLAN/2 system in accordance with the present invention. The system comprises a plurality of access points, one of which is shown at 6, and a plurality of mobile terminals, one of which is shown at 7. The access point 6 comprises a signal source 8, a signal processor 9, radio frequency circuits 10 and an antenna 11. The mobile terminal 7 comprises a signal source 12, a signal processor 13, radio frequency circuits 14 and antenna 15.

In operation, data from the signal source 8 of the access point 6 is sent to the signal processor 9, which encapsulates the data and sends it to the RF circuits 10. The RF circuits 10 modulate the data on a carrier frequency for transmission from the antenna 11. During reception, signals received on the antenna 11 are demodulated in the radio frequency circuits 10 and passed to the signal processor 9.

In operation of the mobile terminal 7, during reception, signals received at the antenna 15 are demodulated in the radio frequency circuits 14 and sent to the signal processor 13. During transmission, data from the signal source 12 is sent to the signal processor 13, which encapsulates the data and sends it to the RF circuits 14. The RF circuits 14 modulate the data for transmission from the antenna 15.

During a start-up phase, when the access point is switched on, it initially measures signals received at the antenna 11 within its allotted frequency ranges to check for interference. The signal processor 9 contains a stored list of the discrete frequencies allotted within the HiperLAN/2 frequency ranges. If interference is detected on a given frequency, that frequency is marked as unavailable in the memory of the signal processor 9. Normal operation begins after the start-up phase with transmission of a signal from the access point 6 at a frequency that is not marked as unavailable.

The mobile terminal 7 has an active phase and a passive ("sleep") phase. The signals transmitted from the access point 6 include both communication data signals and functional data signals, the functional data signals including an identification of the mobile terminal 7 that is addressed. In the passive state, the mobile terminal 7 is responsive only to the functional data signals, circuits that process the communication data signals being shut down in order to conserve battery power. Reception of a functional data signal that includes the relevant identification of the mobile terminal 7 triggers response of the terminal 7 to the communication data.

The access point 6 is normally a fixed terminal whereas the mobile terminal 7 may be a portable terminal. The access point 6 will not necessarily detect interference at the position of each mobile terminal such as 7. Also, the access point 6 may be masked from interference, especially if it is situated indoors, whereas the mobile terminals such as 7 may be more likely to be exposed to and to cause interference if they are situated out of doors. To improve detection of interference and avoidance of causing interference, the mobile terminals 7 are also arranged to detect interference. To this end, the access point 6 is arranged to send a function control signal triggering response of the mobile terminal 7 to received signal strength on its antenna, to which the mobile terminal 7 responds by reporting the detected interference back to the access point 6, as described in more detail below.

Intra-system interference occurs when a mobile terminal 7 receives signals that are not intended for it, either from a different access point 6 than its current home access point or from another mobile terminal 7 with which it is not intended to be in communication. Extra-system interference originates from devices not forming part of the HiperLAN system and, in particular, from radar systems.

In the case of HiperLAN/2 intra-system interference, an access point such as 6 that detects the intra-system interference will respond by changing its communication frequency, after transmitting information to its associated mobile terminals such as 7 as to the new frequency, so that the mobile terminals 7 also change frequency. The dynamic frequency selection is reciprocal, that is to say that access points such as 6 that are transmitting tolerate a certain level of interference but any access point 6 that is receiving changes frequency If necessary in the event of intra-system interference.

In the case of extra-system interference, however, such reciprocity does not exist. Interference with a radar system, especially, is to be reduced as far as possible and the radar system will not react to avoid interference with the HiperLAN system. Accordingly, it is important for the HiperLAN system to detect radar signals on a given frequency and change communication frequency, not only to improve HiperLAN communication, but also especially to avoid the HiperLAN signals interfering with the radar system.

Referring now to figure 4, in this embodiment of the present invention, the detection of interference at both the access point 6 and the mobile terminal 7 is based upon sampling the received signal strength at the antenna 11 or 15. The sampling is made at intervals of x microseconds continuously, so that each sampling period is also x microseconds long. The received signal strength is averaged over the duration of the sampling period. Accordingly, if a brief pulse is received during the sampling period and the duration x of the sampling period is too long compared to that of the received pulse, the average value measured will be relatively low and detection will be more difficult. Measurement over a continuous series of sampling periods enables the duration x of each sampling period to be reduced and detection levels to be improved without risk of missing a radar pulse between two non-consecutive sampling periods.

Normally, levels of interference will be lower than normal received signal levels from and to the home access point and other mobile terminals such as 7 in the same cell. Accordingly, detection of interference will be less sensitive during periods when communication signals are being received. It is considered unacceptable to halt all traffic in the cell during normal operation in order to detect interference. However, during normal operation, empty spaces are available, or may be made available, during unused parts of the frames of the HiperLAN/2 communication signals and, in this embodiment of the invention, checking for extra-system interference is performed during these empty spaces. These empty spaces are indicated for each frame in the frame channel information element of the HiperLAN/2 function data signals.

The received signal strength of a radar pulse during a sampling period is shown at 16 in figure 4, for a radar pulse shorter than or equal to x microseconds. Figure 4 also shows the received signal strength of HiperLAN/2 signals at 17 and 18, the HiperLAN/2 signals extending over several sampling periods with relatively constant signal strengths, to within ±Δ, apart from an initial and final sampling period.

In accordance with this embodiment of the present invention, the HiperLAN/2 terminal detects whether the number n of samples for which the received signal strength exceeds a radar threshold 19 is greater or lower than a minimum duration corresponding to N samples. The duration of N samples, that is to say N*x microseconds, is chosen to be longer than the maximum expected duration of a radar pulse and shorter than the minimum duration of a HiperLAN/2 signal. By way of example, the minimum duration of a HiperLAN signal being eight microseconds, in this embodiment of the invention the sampling interval x is chosen to be two microseconds and the value of N is chosen to be three. Received signal strength greater than the radar threshold 19 for more than three sampling periods is assumed to correspond to HiperLAN/2 intra-system interference (and not to a HiperLAN/2 communication signal of the same cell) since the signal is received during an unused space in the HiperLAN/2 frame. A received signal strength exceeding the radar threshold 19 for three samples or less is assumed to be a radar signal. Figure 5 shows the case of a radar signal that extends over three sampling periods.

It is important to reduce the incidence of false alerts, as these perturb the proper functioning of the HiperLAN/2 system. Accordingly, the data for interference detection performed by a plurality of mobile terminals such as 7 is communicated to the access point 6, which collates the responses from the different mobile terminals such as 7 and deduces the presence of radar interference only if the data from more than one terminal (both mobile terminals and the access point itself) indicates detection. The minimum number of detections required is a function of the number of mobile terminals performing the extra-system interference detection routines. Interference detection by the mobile terminals occurs during unused spaces in the HiperLAN/2 frame, so that reports cannot be transmitted back from the mobile terminals to the access point 6 immediately but are stored for subsequent transmission; this also enables data to be transmitted back to the access point 6 for detections made two or more unused spaces, which are not necessarily consecutive in the frame.

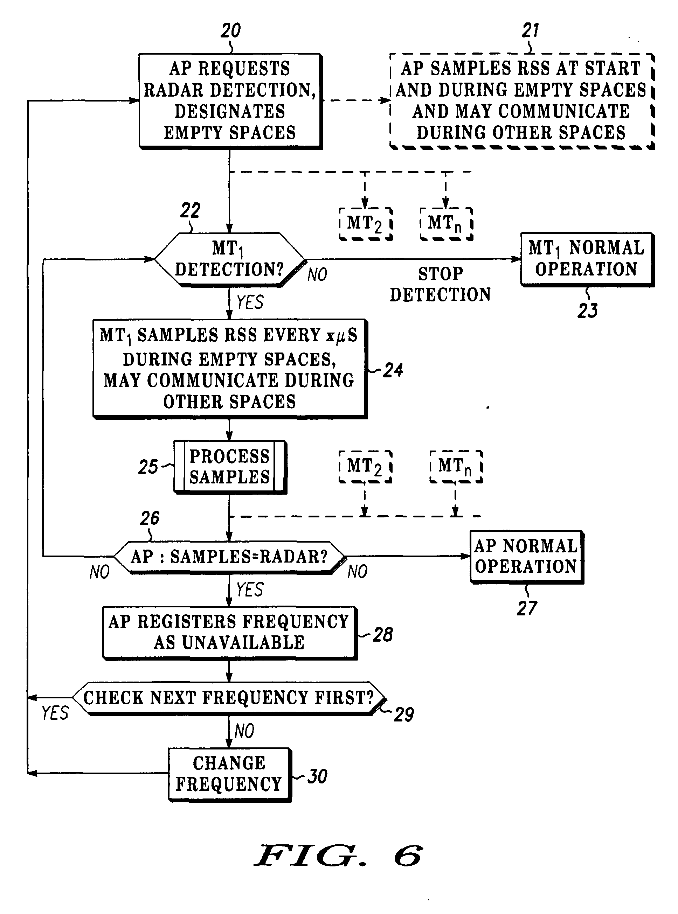

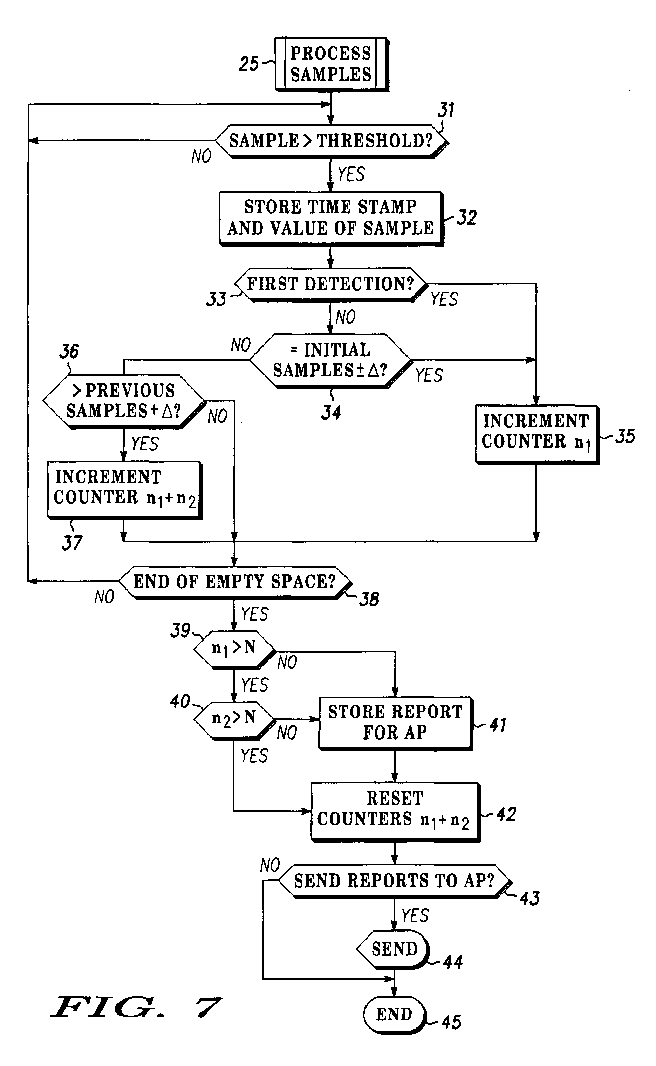

Referring now to figure 6, detection of extra-system interference is separate from the "percentile measurements on used frequency" specified for HiperLAN/2 dynamic frequency selection for intra-system interference, which will not be described in the present specification, and which is conducted in parallel with the process illustrated in figures 6 and 7. Extra-system interference detection starts with a request in the function control signals from the AP, at 20, instructing mobile terminals such as MT₁, MT₂ and MTₙ to perform the radar detection routine, the request including the identifications of the chosen mobile terminals and designating empty spaces in the frame for the detection. As shown at 21, the access point 6 itself may equally perform radar detection during the same empty spaces, being free to communicate with the mobile terminals during other spaces in the frame. At 22, if the function control signal from the access point 6 requires detection by that mobile terminal to continue, the mobile terminal continues and, if not, the mobile terminal stops detection and reverts to normal operation at 23.

When detection is required, the mobile terminal 7 samples the received signal strength continuously at the sampling period interval during a given empty space, being free to communicate with the access point 6 or other mobile terminals such as 7 during the other spaces. The mobile terminal processes the samples at 25, the process sequence being illustrated in figure 7. The results of the sampling and processing are transmitted to the access point 6 by each of the mobile terminals that performed detection only if extra-system interference was detected at that mobile terminal. The access point 6 collates the samples received at 26, and interprets whether more than one mobile terminal had detected extra-system interference. If not, the access point reverts to normal operation and indicates to the mobile terminals such as 7 to revert to normal operation also, as shown at 27.

On the other hand, if the access point 6 concludes that a radar signal was detected, the access point registers that frequency as unavailable at 28 and, at 29, decides whether to check another frequency before changing communication frequency or to change communication frequency and check interference subsequently. In the former case, the cycle reverts to requesting interference detection, at 20, and in the latter case the communication frequency is changed first, at 30.

Figure 7 shows the routine 25 of processing the samples in the mobile terminals. The access point 6 may follow a similar routine for processing its own samples. The received signal strength of the frame is measured during each sample period in the same unused space and the mobile terminal compares the sample with the radar detection threshold 19 at 31. If the sample is less than the threshold 19, the mobile terminal passes to the next sample in the same space at 31. If the received signal strength of the sample exceeds the threshold 19, the time stamp and value of the sample is registered at 32.

At 33, if the sample detected is not the first sample detection exceeding the radar threshold, a sub-routine follows which is intended to reduce the incidence of false alerts due to two HiperLAN/2 interference signals that are partially coincident during one or more sampling periods, while recognising a radar signal that is partially coincident with at least a single HiperLAN/2 interference. At 34, the value of the current sample is compared with the value of the initial samples in the current unused space. If the interference is HiperLAN intra-system interference, the subsequent samples will normally be within ±Δ of the initial samples. In the preferred embodiment, the third and subsequent samples are compared with the average of the values of the first two samples rather than a single value, to reduce the risk of error.

If the current sample is closer than ±Δ to the initial samples, a counter n₁ is incremented at 35. If the current sample is not closer than plus or minus delta to the initial samples, but is lower, it is assumed that the current sample does not correspond to radar interference but that the previous samples may do. Counter n₁ is therefore not incremented and the routine passes to the next step 38. If the current pulse is greater than previous samples +Δ, however, it is assumed that the previous samples corresponded to HiperLAN interference and the current sample may correspond to radar interference. Counter n₁ and also a counter n₂ are therefore incremented at 37.

The first sample detection exceeding the threshold will inevitably not be within ±Δ of previous samples. Accordingly, at 33, if it is the first detection in that space, the counter n₁ is incremented directly, at 35.

At 38, the mobile terminal checks whether the current sample corresponds to the end of the current empty space; if not it passes to the next sample at 31 and if it does correspond to the end of the empty space, it checks the values of the counters n₁ and n₂. At 39, the mobile terminal checks whether n₁ is greater than N; if not, it is assumed that a radar interference has been detected and the report is stored for subsequent reporting to the access point 6. If n₁ is greater than N, n₂ is checked relative to N at 40. If n₂ is less than N, the assumption that a radar interference has been detected is stored for reporting to the access point 6; if n₂ is also greater than N, it is assumed that neither n₁ nor n₂ correspond to detection of radar interference.

In both cases, the counters n₁ and n₂ are then reset at 42. When the reports are to be sent to the access point 6, the mobile terminal checks at 43 whether radar was detected and, if so, sends the reports at 44 and the routine ends at 45; otherwise, the routine ends immediately after 43.

It should be noted that, in the case of intra-system interference, radar interference will often come from fixed installations that can be expected to last for a long period. Although the disturbance to normal communication has been reduced as far as possible in the radar interference detection routines, it is still desirable to reduce the repetition of communication of the detection results and changes of frequency as far as possible. Accordingly, unlike dynamic frequency selection in the case of intra-system interference, the unavailable frequencies registered at 28 are stored in the access point 6 for several hours and preferably for several days. The detection routine is still performed more frequently, but the likelihood of again using a frequency used by the same radar is reduced.

The access point 6 decides how many and which mobile terminals are to perform measurements at the same time. The more mobile terminals perform detection of extra-system interference at the same time, the lower the probability of false alarm will be and the higher the probability of correct detection will be. However, in this embodiment of the invention, the access point 6 does not involve mobile terminals that are currently in the passive ("sleep") mode of operation.

The value of the detection interval x is a matter of choice. The preferred value is two microseconds, and in practice it is preferred to choose intervals exceeding 600 nanoseconds at least, even though hardware would allow shorter intervals.

The choice whether to check other possible future communication frequencies before changing the communication frequency as at 29 is partly influenced by the switching time of mobile terminals to receive the instruction to change frequencies and execute it. In this embodiment of the invention, the available frequencies are checked rapidly without changing communication frequency at a period just after the start-up of the access point 6, in order to detect as rapidly as possible meteorological radar whose beam rotation rate is slow.

In the preferred embodiment of the invention, a terminal receiving a communication signal (whether a mobile terminal 7 or an access point 6) during used spaces in the frames also performs estimates of the interfering received signal strength during each OFDM symbol. An estimate of this kind is available every four microseconds. This estimate is compared to a threshold giving an approximate indication whether the interference arises potentially from radar. The threshold is typically different from the threshold 19 and is chosen as a function of the expected signal strengths.

In this embodiment of the invention, for each processed OFDM symbol the complex values of every pilot sub-carrier are extracted. An estimate of the complex noise is obtained by subtracting the product of the channel estimate given by the transmitted pilot from the received pilot signal strength. The channel estimate is obtained at the beginning of the HiperLAN/2 signal and is required for normal OFDM processing in any case. The average of the noise estimates is compared with the threshold and more accurate power measurements during unused spaces as described above are scheduled during future frames by the access point 6.

During the start-up phase, in the preferred embodiment of the invention, the access point 6 itself checks for interference on all frequencies it is permitted to use, in accordance with the HiperLAN/2 standards. According to the current standards, the access point 6 is able to choose the frequency with the lowest intra-system interference. In the present embodiment of the invention, however, the initial communication frequency is selected from a subset of the total available frequencies, the chosen frequency being the frequency within the subset that has the least intra-system interference. The subset of frequencies is stored in the memory of the access point 6 and corresponds to the range from 5150 MHz to 5250 MHz, where radar interference is not expected. If intra-system interference is detected on the first frequency of the subset selected, the communication frequency is changed to another frequency of the subset, unless all the frequencies of the subset are registered as interfered (and therefore unavailable), in which case a frequency from outside the subset is chosen.

During the start-up period, the access point 6 is free to detect radar interference from a simplified routine as no communication with the mobile terminals is yet established. The period of this detection is reduced in the preferred embodiment of the invention, to avoid inconvenience to the user when the access point 6 is started up. In order to ensure that radar interference from meteorological radar, for example, whose repetition rate is slow is properly detected, the detection routines shown in figures 6 and 7 involving the mobile terminals are started immediately after the start-up phase.

## Claims

1. Apparatus for use in communication between at least two terminals (6, 7) with the ability to detect interference, said communication comprising transmitting data between said terminals (6, 7) via electromagnetic signals of at least a first duration, said electromagnetic signals comprising one or more carrier frequencies within one or more ranges (1, 2) for which extra-system interference is possible, said apparatus being incorporable in at least one of said terminals (6, 7) and comprising interference detection means responsive to received signal strengths corresponding to intra-system interference (4, 17, 18),
**characterised in that**, for detection of extra-system interference (5, 16), said interference detection means is selectively responsive to received signal strengths that exceed a threshold level (19) for a second duration that is shorter than said first duration.

2. Apparatus as claimed in claim 1, and comprising response means for triggering in at least one of said terminals a first reaction to detection of said intra-system interference by said interference detection means and a second, different reaction to detection of said extra-system interference by said interference detection means.

3. Apparatus as claimed in claim 2, wherein said response means is arranged to trigger a change in said one or more carrier frequencies in response to detected interference.

4. Apparatus as claimed in claim 3, arranged in operation to select a frequency from a plurality of discrete frequencies whose availability is stored in said response means, said response means is arranged to register the frequency upon which extra-system interference was detected as unavailable (28) and to trigger a change in said one or more carrier frequencies to a different frequency at least in response to detection of extra-system interference (5, 16).

5. Apparatus as claimed in claim 4, arranged in operation to select, at least during a start-up phase, said frequency from a sub-set of said plurality of discrete frequencies and to change to another available frequency of said sub-set in response to detected interference unless all frequencies of said sub-set are registered as unavailable.

6. Apparatus as claimed in any preceding claim, wherein said interference detection means is arranged to sample said received signal strengths in a succession of sampling periods (16, 17, 18) and, for said detection of extra-system interference (5), is arranged to respond selectively to received signal strengths that exceed said threshold level for not more than a limited number (N) of said sampling periods (16) in the same succession of sampling periods.

7. Apparatus as claimed in claim 6 wherein, for said detection of extra-system interference (5), said interference detection means is arranged to respond selectively if the received signal strength exceeds signal strengths previously sampled in the same succession of sampling periods (17, 16, 18) by more than a minimum variation (±Δ) for not more than a limited number (N) of said sampling periods.

8. Apparatus as claimed in any preceding claim, wherein said signal comprises repetitive frames, each frame comprising a plurality of spaces for said data, and said interference detection means is responsive to received signal strengths that exceed said threshold level during spaces that are unused for said data.

9. Apparatus as claimed in claim 8 wherein said interference detection means comprises means in one of said terminals that is responsive while said one terminal is receiving noise levels that exceed a noise threshold level during spaces that are used for data to trigger said interference detection during spaces that are unused for data.

10. Apparatus as claimed in any preceding claim, wherein said terminals include an access point (6) and at least one further terminal (7), said access point (6) having communication links with at least one network with which said further terminal (7) may communicate through said access point, said apparatus comprising means at said further terminal (7) responsive to signal strengths received by said further terminal (7) for transmitting to said access point (6) an indication of detection, and means at said access point (6) selectively responsive to reception of said indication of detection.

11. Apparatus as claimed in claim 10, wherein said means at said access point (6) is selectively responsive to detection of interference by a plurality of said terminals (6, 7).

12. Apparatus as claimed in claim 10 or claim 11, wherein said means at said access point (6) is arranged to transmit a function control signal to said means at said further terminal (7) to trigger response of said further terminal to said extra-system interference.

13. Apparatus as claimed in claim 12, wherein said signal comprises repetitive frames, each frame comprising a plurality of spaces for said data, said function control signal designating spaces in said frames as unused for data, and said means at said further terminal being responsive to received signal strengths that exceed said threshold level during the designated unused spaces.

14. Apparatus as claimed in claim 12 or claim 13, wherein said means at said access point (6) is responsive to detection of interference to transmit a function control signal to said further terminal (7) to trigger response of said means at said further terminal to said extra-system interference.

15. Apparatus as claimed in any of claims 12 to 14, wherein said means at said further terminal (7) has an active mode of operation in which it is responsive to said communication data and to said function control signal and a passive mode in which it is responsive to said function control signal but not to said communication data, and said means at said access point (6) is arranged to transmit a function control signal to said means at said further terminal (7) to trigger response of said means at said further terminal to said extra-system interference conditionally upon said means at said further terminal being in said active mode.

16. Apparatus as claimed in any preceding claim, wherein said one or more ranges (1, 2) of carrier frequencies include frequencies (3) attributed to radar signals and, for said detection of extra-system interference, said interference detection means is responsive to reception of radar signals.

17. A terminal comprising apparatus for communication and detection of extra-system interference as claimed in any preceding claim.

18. A system comprising apparatus for communication and detection of extra-system interference as claimed in any of claims 1 to 16, comprising said at least two terminals (6, 7).

## Patentansprüche

1. Vorrichtung zur Anwendung bei einer Kommunikation zwischen mindestens zwei Endgeräten (6, 7) mit der Fähigkeit Interferenzen zu detektieren, wobei die Kommunikation ein Übertragen von Daten zwischen den Endgeräten (6, 7) über elektromagnetische Signale mit mindestens einer ersten Dauer umfasst, wobei die elektromagnetischen Signale eine oder mehrere Trägerfrequenzen in einem oder mehreren Bereichen (1, 2) umfassen, für die systemexterne Interferenzen möglich sind, wobei die Vorrichtung in mindestens einem der Endgeräte (6, 7) einbaubar ist und Interferenzdetektionsmittel umfasst, die auf empfangene Signalstärken reagieren, die systeminternen Interferenzen (4, 17, 18) entsprechen,
**dadurch gekennzeichnet, dass** die Interferenzdetektionsmittel, zur Detektion von systemexternen Interferenzen (5, 16), selektiv auf empfangene Signalstärken reagieren, die für eine zweite Dauer, die kürzer ist, als die erste Dauer, einen Schwellenwertpegel (19) übersteigen.

2. Vorrichtung nach Anspruch 1, die Reaktionsmittel umfasst, zum Auslösen, in mindestens einem der Endgeräte, einer ersten Reaktion auf die Detektion der systeminternen Interferenz durch die Interferenzdetektionsmittel und einer zweiten, unterschiedlichen Reaktion auf die Detektion der systemexternen Interferenz durch die Interferenzdetektionsmittel.

3. Vorrichtung nach Anspruch 2, wobei die Reaktionsmittel eingerichtet sind, um eine Änderung in der einen oder den mehreren Trägerfrequenzen in Reaktion auf detektierte Interferenzen auszulösen.

4. Vorrichtung nach Anspruch 3, die unter Betriebsbedingungen eingerichtet ist, um eine Frequenz aus einer Mehrzahl von diskreten Frequenzen auszuwählen, deren Verfügbarkeit in den Reaktionsmitteln gespeichert ist, wobei die Reaktionsmittel eingerichtet sind, um die Frequenz, auf der systemexterne Interferenzen detektiert wurden, als unverfügbar zu registrieren (28) und eine Änderung der einen oder mehreren Trägerfrequenzen, in eine andere Frequenz, mindestens in Reaktion auf eine Detektion einer systemexternen Interferenz (5, 16), auszulösen.

5. Vorrichtung nach Anspruch 4, die unter Betriebsbedingungen eingerichtet ist, um mindestens während einer Inbetriebsetzungsphase die Frequenz aus einer Teilmenge der Mehrzahl von diskreten Frequenzen auszuwählen und in eine andere verfügbare Frequenz aus der Teilmenge in Reaktion auf detektierte Interferenzen zu ändern, außer wenn alle Frequenzen der Teilmenge als nicht verfügbar registriert sind.

6. Vorrichtung nach einem der vorangehenden Ansprüche, wobei die Interferenzdetektionsmittel eingerichtet sind, um die empfangenen Signalstärken in einer Abfolge von Abtastperioden (16, 17, 18) abzutasten und, zur Detektion von systemexterner Interferenz (5), eingerichtet ist, um selektiv auf empfangene Signalstärken zu reagieren, die den Schwellenwert um nicht mehr als eine begrenzte Zahl (N) der Abtastperioden (16) in der selben Abfolge von Abtastperioden übersteigen.

7. Vorrichtung nach Anspruch 6, wobei für die Detektion einer systemexternen Interferenz (5) die Interferenzdetektionsmittel eingerichtet sind, um selektiv zu reagieren, wenn die empfangene Signalstärke die zuvor in der selben Abfolge von Abtastperioden (17, 16, 18) abgetasteten Signalstärken um mehr als eine minimale Abweichung (±Δ) für nicht mehr als eine begrenzte Zahl (N) der Abtastperioden übersteigt.

8. Vorrichtung nach einem der vorangehenden Ansprüche, wobei das Signal sich wiederholende Rahmen umfasst, wobei jeder Rahmen eine Mehrzahl von Zeiträumen für die Daten umfasst und die Interferenzdetektionsmittel auf empfangene Signalstärken reagieren, die den Schwellenwertpegel während Zeiträumen, die für die Daten nicht verwendet werden, übersteigen.

9. Vorrichtung nach Anspruch 8, wobei die Interferenzdetektionsmittel Mittel in einem der Endgeräte umfassen, die reagieren, während das eine Endgerät Rauschpegel empfängt, die einen Rauschschwellenwertpegel während Zeiträumen übersteigen, die für Daten verwendet werden, um die Interferenzdetektion während Zeiträumen auszulösen, die nicht für Daten verwendet werden.

10. Vorrichtung nach einem der vorangehenden Ansprüche, wobei die Endgeräte einen Zugangspunkt (6) und mindestens ein weiteres Endgerät (7) umfassen, wobei der Zugangspunkt (6) Kommunikationsverbindungen mit mindestens einem Netzwerk hat, mit dem das weitere Endgerät (7) über den Zugangspunkt kommunizieren kann, wobei die Vorrichtung Mittel an dem weiteren Endgerät (7) umfasst, die auf Signalstärken reagieren, die durch das weitere Endgerät (7) empfangen werden, um eine Detektionsanzeige an den Zugangspunkt (6) zu übertragen, und Mittel an dem Zugangspunkt (6) umfasst, die selektiv auf einen Empfang der Detektionsanzeige reagieren.

11. Vorrichtung nach Anspruch 10, wobei die Mittel an dem Zugangspunkt (6) selektiv auf eine Detektion von Interferenz durch eine Mehrzahl der Endgeräte (6, 7) reagieren.

12. Vorrichtung nach Anspruch 10 oder Anspruch 11, wobei die Mittel an dem Zugangspunkt (6) eingerichtet sind, um ein Funktionssteuersignal an die Mittel bei dem weiteren Endgerät (7) zu übertragen, um eine Reaktion des weiteren Endgerätes auf die systemexterne Interferenz auszulösen.

13. Vorrichtung nach Anspruch 12, wobei das Signal sich wiederholende Rahmen umfasst, wobei jeder Rahmen eine Mehrzahl von Zeiträumen für die Daten umfasst, wobei das Funktionssteuersignal Zeiträume in den Rahmen als für Daten ungenutzt bezeichnet und wobei die Mittel bei dem weiteren Endgerät auf empfangene Signalstärken reagieren, die den Schwellenwertpegel während der bezeichneten ungenützten Zeiträume übersteigen.

14. Vorrichtung nach Anspruch 12 oder Anspruch 13, wobei die Mittel an dem Zugangspunkt (6) auf eine Detektion von Interferenz reagieren, um ein Funktionssteuersignal an das weitere Endgerät (7) zu übertragen, um eine Reaktion der Mittel bei dem weiteren Endgerät auf die systemexterne Interferenz auszulösen.

15. Vorrichtung nach einem der Ansprüche 12 bis 14, wobei die Mittel bei dem weiteren Endgerät (7) einen aktiven Betriebsmodus haben, in dem sie auf die Kommunikationsdaten und das Funktionssteuersignal reagieren, und einen passiven Modus haben, in dem sie auf das Funktionssteuersignal aber nicht auf die Kommunikationsdaten reagieren, und die Mittel bei dem Zugangspunkt (6) eingerichtet sind, um ein Funktionssteuersignal an die Mittel bei dem weiteren Endgerät (7) zu übertragen, um eine Reaktion der Mittel bei dem weiteren Endgerät auf die systemexterne Interferenz auszulösen, mit dem Vorbehalt, dass sich die Mittel bei dem weiteren Endgerät in dem aktiven Modus befinden.

16. Vorrichtung nach einem der vorangehenden Ansprüche, wobei die eine oder die mehreren Zeiträume (1, 2) der Trägerfrequenzen Frequenzen (3) enthalten, die Radarsignalen zugeschrieben werden, und die Interferenzdetektionsmittel für die Detektion von systemexterner Interferenz auf einen Empfang von Radarsignalen reagieren.

17. Endgerät, das eine Vorrichtung zur Kommunikation und zur Detektion von systemexterner Interferenz umfasst, nach einem der vorangehenden Ansprüche.

18. System, das eine Vorrichtung zur Kommunikation und zur Detektion von systemexterner Interferenz umfasst, nach einem der Ansprüche 1 bis 16, das mindestens die zwei Endgeräte (6, 7) umfasst.

## Revendications

1. Dispositif destiné à être utilisé dans une communication entre au moins deux terminaux (6,7), avec possibilité de détecter une interférence, ladite communication comprenant la transmission de données entre lesdits terminaux (6,7) par l'intermédiaire de signaux électromagnétiques possédant au moins une première durée, lesdits signaux électromagnétiques comprenant une ou plusieurs fréquences porteuses dans une ou plusieurs gammes (1,2), pour lesquelles une interférence hors du système est possible, ledit dispositif pouvant être incorporé dans au moins l'un desdits terminaux (6,7) et comprenant des moyens de détection d'interférence aptes à répondre à des intensités reçues de signal correspondant à une interférence (4, 17, 18) à l'intérieur du système,
**caractérisé en ce que**, pour la détection de l'interférence (5,16) hors du système, lesdits moyens de détection d'interférence sont aptes à répondre sélectivement à des intensités de signal reçu qui dépassent un niveau de seuil (19) pendant une seconde durée qui est inférieure à ladite première durée.

2. Dispositif selon la revendication 1, et comprenant des moyens de réponse pour déclencher, dans au moins l'un desdits terminaux, une première réaction à la détection de ladite interférence à l'intérieur du système, par lesdits moyens de détection d'interférence, et une seconde réaction différente à la détection de ladite interférence à l'extérieur du système par lesdits moyens de détection d'interférence.

3. Dispositif selon la revendication 2, dans lequel lesdits moyens de réponse sont agencés de manière à déclencher une modification dans lesdites une ou plusieurs fréquences porteuses en réponse à une interférence détectée.

4. Dispositif selon la revendication 3, agencé de manière à fonctionner pour sélectionner une fréquence parmi une pluralité de fréquences discrètes, dont la disponibilité est mémorisée dans lesdits moyens de réponse, lesdits moyens de réponse étant agencés pour enregistrer la fréquence, à laquelle une interférence hors du système a été détectée comme indisponible (28) et déclencher une commutation desdites une ou plusieurs fréquences porteuses sur une fréquence différente au moins en réponse à la détection d'une interférence (5, ) hors du système.

5. Dispositif selon la revendication 4, agencé du point de vue fonctionnement pour sélectionner, au moins pendant une phase de démarrage, ladite fréquence parmi un sous-ensemble de ladite pluralité de fréquences discrètes et pour réaliser la commutation sur une autre fréquence disponible dudit sous-ensemble en réponse à une interférence détectée jusqu'à ce que toutes les fréquences dudit sous-ensemble soient enregistrées comme indisponibles.

6. Dispositif selon l'une quelconque des revendications précédentes, dans lequel lesdits moyens de détection d'interférence sont agencés de manière à échantillonner lesdites intensités de signal reçu pendant une succession de périodes d'échantillonnage (16,17,18) et sont agencés, pour ladite détection d'une interférence (5) hors du système, pour répondre sélectivement à des intensités de signal reçu qui dépassent ledit niveau de seuil de pas plus d'un nombre limité (N) desdites périodes d'échantillonnage (16), dans la même succession de périodes d'échantillonnage.

7. Dispositif selon la revendication 6, dans lequel, pour ladite détection d'une interférence (5) hors du système, lesdits moyens de détection d'interférence sont agencés de manière à répondre sélectivement si l'intensité du signal reçu dépasse des intensités de signal précédemment échantillonnées dans la même succession de périodes d'échantillonnage (17,16,18), de plus d'une variation minimale (±Δ), sur plus d'un nombre limité (N) desdites périodes d'échantillonnage.

8. Dispositif selon l'une quelconque des revendications précédentes, dans lequel ledit signal comprend des trames répétitives, chaque trame comprenant une pluralité d'espaces pour lesdites données, et lesdits moyens de détection d'interférence sont sensibles aux intensités du signal reçu qui dépassent ledit niveau de seuil pendant des espaces qui ne sont pas utilisés pour lesdites données.

9. Dispositif selon la revendication 8, dans lequel lesdits moyens de détection d'interférence comprennent des moyens situés dans un premier desdits terminaux, qui sont aptes à répondre alors que ledit premier terminal reçoit des niveaux de bruit qui dépassent un niveau de seuil de bruit dans des espaces, qui sont utilisés pour que des données déclenchent ladite détection d'interférence dans des espaces qui sont inutilisés pour des données.

10. Dispositif selon l'une quelconque des revendications précédentes, dans lequel lesdits terminaux incluent un point d'accès (6) et au moins un autre terminal (7), ledit point d'accès (6) possédant des liens de communication avec au moins un réseau, avec lequel ledit autre terminal (7) peut communiquer par l'intermédiaire dudit point d'accès, ledit dispositif comprenant des moyens situés dans ledit autre terminal (7) apte à répondre auxdites intenaités du signal reçues par ledit autre terminal (7) pour émettre vers ledit point d'accès (6) une indication de détection, et des moyens situés au niveau dudit point d'accès (6) aptes à répondre sélectivement à la réception de ladite indication de détection.

11. Dispositif selon la revendication 10, dans lequel lesdits moyens au niveau dudit point d'accès (6) sont aptes à répondre sélectivement à la détection d'une interférence par une pluralité desdits terminaux (6,7).

12. Dispositif selon la revendication 10 ou la revendication 11, dans lequel lesdits moyens au niveau dudit point d'accès (6) sont agencés de manière à transmettre le signal de commande de fonction auxdits moyens situés au niveau dudit autre terminal (7) pour déclencher une réponse dudit autre terminal à ladite interférence hors du système.

13. Dispositif selon la revendication 12, dans lequel ledit signal comprend des trames répétitives, chaque trame comprenant une pluralité d'espaces pour lesdites données, ledit signal de commande de fonction désignant des espaces dans lesdites trames comme étant non utilisés pour des données, et lesdits moyens dans ledit autre terminal étant sensibles à des intensités de signal reçu, qui dépassent ledit niveau de seuil dans les espaces non utilisés désignés.

14. Dispositif selon la revendication 12 ou la revendication 13, dans lequel lesdits moyens au niveau dudit point d'accès (6) sont aptes à répondre à la détection d'une interférence pour transmettre un signal de commande de fonction audit autre terminal (7) pour déclencher la réponse desdits moyens dans ledit autre terminal, à ladite interférence hors du système.

15. Dispositif selon l'une quelconque des revendications 12 à 14, dans lequel lesdits moyens dans ledit autre terminal (7) possèdent un mode actif de fonctionnement, dans lequel il est sensible auxdites données de communication et audit signal de commande de fonction, et un mode passif, dans lequel il est sensible audit signal de commande de fonction, mais pas auxdites données de communication, et lesdits moyens au niveau dudit point d'accès (6) sont agencés de manière à transmettre un signal de commande de fonction auxdits moyens dans ledit autre terminal (7) pour déclencher une réponse desdits moyens dans ledit autre terminal à ladite interférence hors du système, d'une manière conditionnelle lorsque lesdits moyens situés dans ledit autre terminal sont dans ledit mode actif.

16. Dispositif selon l'une quelconque des revendications précédentes, dans lequel ladite une ou plusieurs gammes (1,2) de fréquences porteuses incluent des fréquences (3) attribuées à des signaux radar et, pour ladite détection d'une interférence hors du système, lesdits moyens de détection d'interférence sont aptes à répondre à la réception de signaux radar.

17. Dispositif terminal comprenant un dispositif de communication et de détection d'une interférence hors du système selon l'une quelconque des revendications précédentes.

18. Système comprenant un dispositif de communication et de détection d'une interférence hors du système selon l'une quelconque des revendications 1 à 16, comprenant lesdits au moins deux terminaux (6,7).
